# EUROPEAN PATENT SPECIFICATION

(11) **EP 3 465 193 B1**
(45) Date of publication and mention of the grant of the patent: **23.07.2025**
(21) Application number: 17728637.4
(22) Date of filing: 05.06.2017
(51) Int. Cl.: G01N 27/30, G01N 27/416, G01N 27/48

(54) **REFERENCE ELECTRODE USING LOCAL ENVIRONMENT PH CONTROL**
REFERENZELEKTRODE MIT LOKALER UMGEBUNGS-PH-WERT-REGELUNG
ÉLECTRODE DE RÉFÉRENCE UTILISANT UN RÉGLAGE DU PH DE L'ENVIRONNEMENT LOCAL

(30) Priority: 03.06.2016 GB 201609716
(43) Date of publication of application: 10.04.2019
(73) Proprietor: ANB Sensors Limited, Toft, Cambridgeshire CB23 2RF (GB)
(72) Inventor: LAWRENCE, Nathan, Toft, Cambridgeshire CB23 2RF (GB)
(74) Representative: Meissner Bolte Partnerschaft mbB
(86) International application number: PCT/GB2017/051614
(87) International publication number: WO 2017/208029

(56) References cited:
- WO-A1-2016/069935
- WO-A1-2018/146543
- JP-A- H09 222 414
- US-A1- 2014 332 411
- US-A1- 2015 027 887

## Description

### BACKGROUND

Embodiments of the present disclosure provide a reference system for an ion selective sensor, for example an electrochemical sensor, a glass electrode, a potentiometric sensor and/or the like. The reference system comprises a reference electrode coupled with a redox active species, wherein the reference electrode is configured in use to contact a low buffer/low buffering capacity media, such that the redox active species controls the pH of the media local to the surface of the electrode. For purposes of the following disclosure the term low buffer is used to describe either a low buffer or a low buffering capacity media, where a common low buffer media comprises water and common low buffering capacity media comprise seawater, saline, KCl or the like, where the media is not a low buffer media and/or may have a high ionic strength, but the media has a low buffering capacity. Additionally, for purposes of the present disclosure the term "local to the surface" means the media environment proximal/local to the surface of the reference electrode. Because the redox active species sets the pH in the low buffer media local to the reference electrode, the reference electrode will see a constant pH and give a constant redox response to this pH. In embodiments of the present disclosure, this constant response is used as a reference for an ion selective/electrochemical sensor.

In chemistry, pH is a numeric scale used to specify the acidity or basicity (alkalinity) of an aqueous solution. It is approximately the negative of the logarithm to base 10 of the molar concentration, measured in units of moles per liter, of hydrogen ions. More precisely it is the negative of the logarithm to base 10 of the activity of the hydrogen ion. Solutions with a pH less than 7 are acidic and solutions with a pH greater than 7 are basic. Pure water is neutral, being neither an acid nor a base.

pH measurements are important in agronomy, medicine, biology, chemistry, agriculture, forestry, food science, environmental science, oceanography, civil engineering, chemical engineering, nutrition, water treatment and water purification, as well as many other applications.

For nearly a century, pH has most commonly been measured using a glass electrode. The glass electrode is a combination electrode that combines both a glass and a reference electrode into one body. The combination electrode consists of the following parts: a sensing part of the electrode, a bulb made from a specific glass; an internal electrode, usually silver chloride electrode or calomel electrode; an internal solution, usually a pH=7 buffered solution of 0.1 mol/L KCl or 1×10⁻⁷ mol/L HCl; a reference electrode, usually the same type with a reference internal solution, usually 0.1 mol/L KCl; a junction with studied solution, usually made from ceramics or capillary with quartz fiber; and the body of electrode, made from non-conductive glass or plastics.

Glass electrodes cannot be used in many industries because of their fragility, requirement of calibration before use and need to be stored under appropriate conditions. In addition, it is well-known in the art that the reference electrode of the glass electrode, normally a silver/silver chloride system, suffers from drift, such that the measurements from the glass electrode are inaccurate. This issue of drift in reference electrode systems, including the silver/silver chloride reference electrode, is well-known and there is an unmet need in the ion selective/electrochemical sensor industry for a reference system that does not drift/does not require recalibration.

A number of chemical analysis tools are known from chemical laboratory practice. Such known analysis tools include for example the various types of chromatography, electrochemical and spectral analysis. Particularly, the potentiometric method has been widely used for the measurements of water composition both in the laboratory and in the field of ground water quality control. U.S. Pat. No. 5,223,117 discloses a two-terminal voltammetric micro sensor having an internal reference using molecular self-assembling to form a system in which the reference electrode and the indicator electrode are both on the sensor electrode. The reference molecule is described as a redox system that is pH-insensitive (no proton transfer), while the indicator molecule is pH sensitive and is formed by a hydroquinone based redox system having a potential that shifts with the pH (the pH sensitive molecule is herein referred to as a redox active species). Both, reference molecule and indicator molecule layers are prepared by self-assembly on gold (Au) microelectrodes. In the known micro-sensor, a pH reading is derived from peak readings of the voltammograms.

Recently there has been significant work in the development of pH sensors for use in the water industry, where the concentration of dissolved buffer is low. Interest in this area stemmed from the work by Compton *et al.,* (*see* C. Batchelor-McAuley, B.R. Kozub, D. Menshkau, R.G. Compton, Voltammetric Responses of Surface-Bound and Solution-Phase Anthraquinone Moieties in the Presence of Unbuffered Aqueous Media, J. Phys. Chem. C 115, pp. 714-718 (2011)), who showed the use of classical quinone/hydroquinone voltammetry to monitor pH in these systems failed. Compton established that the proton coupled electrochemical process perturbed the pH of the solution locally to the electrode when little or no buffer and/or ionic salt was in the analyte solution. Compton's work suggested the unsuitability of redox active species to measure pH in low buffer analytes.

As well as measuring pH in source water, there is also a need to measure pH in seawater and saline solutions. One important reason for measuring pH in saltwater is to monitor the effects of carbon dioxide in the atmosphere on the pH of the Oceans. As part of its operational definition of the pH scale, the IUPAC defines a series of buffer solutions across a range of pH values (often denoted with NBS or NIST designation). These solutions have a relatively low ionic strength (~0.1) compared to that of seawater (~0.7), and, as a consequence, are not recommended for use in characterizing the pH of seawater, since the ionic strength differences cause changes in electrode potential. To resolve this problem, an alternative series of buffers based on artificial seawater have been developed. This new series resolves the problem of ionic strength differences between samples and the buffers, and the new pH scale is referred to as the 'total scale', often denoted as pHT. The total scale was defined using a medium containing sulfate ions. These ions experience protonation, H⁺ + SO₄²⁻ 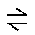 HSO₄⁻, such that the total scale includes the effect of both protons (free hydrogen ions) and hydrogen sulfate ions: [H⁺]T = [H⁺]F + [HSO₄⁻].

Recently there has been significant work in the development of pH sensors for use in the water industry where the concentration of dissolved buffer is low. For purposes of clarification, the water industry concerns the monitoring, management, transport and/or of water, which in general does not contain large amounts of ionic salts or dissolved buffer. Traditionally electrochemical pH sensors have focused on either glass electrode or ISFET technologies, which ultimately suffer from the same inherent issue, drift of the reference systems and thereby requiring constant recalibration. Although a solution to the issue on the ISFET has been proposed which uses a second reference electrode species in a controlled environment to account for drift in the primary electrode, the ISFET electrode still needs to be stored under wet conditions and recalibrated after each series of measurement for validation purposes.

Over the past 15 years, work has been performed on developing a pH sensor utilizing traditional hydroquinone/quinone chemistry as the pH sensing element and where reference electrode drift is overcome in the sensor using a species that is insensitive to pH, similar to the microsensor described above in Wrighton. In all of this work, the examples of the species that are insensitive to pH that have been described/used undergo only an electron transfer process, which limits the molecules that can be utilized. Despite this limitation, such insensitive species provide significant advantages over the traditional reference techniques, as the reference systems using the pH insensitive species can be stored dry and do not require a stable external reference electrode; hence the pH sensor using such a reference system can provide for calibration less operation.

The challenge, however, is to find a stable reference compound capable of surviving deployment over a long period of time and/or being insensitive to varying concentrations of species/contamination found within the solution being tested. To this end a significant amount of focus has been on the use of ferrocene based species, which species undergo a one electron oxidation to the resulting ferricenium ion. Judicious manipulation of the ferrocene structure enhances stability, however polymeric based ferrocene has shown to suffer from electron mobility issues through the ferrocene chain. In addition, several ferrocene molecules have been shown to have redox potentials sensitive to the concentration and type of anion species in the solution being tested and hence can only be used as a reference when the anion system does not change greatly. In addition, ferrocene reference systems need to be calibrated in the local environment prior to deployment.

A problem for pH sensors, ion selective sensors, glass electrode sensors and electrochemical sensors, is the need for a stable reference electrode. In the glass electrode described herein, the reference electrode in KCl solution can drift during Operation making the probe inaccurate. With electrochemical sensors using redox systems, references similar to those used in the glass electrode will also drift. Moreover, use of redox sensitive species that provide an electron, such as ferrocene, as a reference are problematic because the ferrocene is difficult to stabilize on the electrode and the redox potential of the species may drift because of the instability. To-date, the reference electrode has been a major issue with ion selective sensors, electrochemical sensors, glass electrodes and/or the like. Electrochemists often suggest using the power supply as a reference to avoid the issues discussed herein, but ev en the power source cannot provide a stable reference. In addition, the current reference systems, such as calomel, silver-silver chloride systems and/or the like may not be usable for certain applications as they are bulky, disposed in a chamber behind a frit or the like, and so may not be suitable for sensors for use in confined spaces/locations, such as medical/pharmaceutical sensors, microfluidics and/or the like.

Patent Document US 2015/027887 A1 relates to a voltammetric sensor capable of communicating with a mobile or remote computing device, said sensor comprising: a working electrode, a reference electrode, a counter electrode, firmware and electronics for voltammetry and signal processing with optional local display and control, and a communications interface.

In particular, Patent Document US 2015/027887 A1 relates to voltammetric sensors used in a self-contained, optionally hand-held, instrument, or whose output is transmitted through a wired or wireless connection to other computer devices and systems for display, storage, or further processing.

Patent document US 2014/332411 A1 relates to a method of determining the pH of an aqueous liquid which contains little or no buffer, such as does not contain more than 0.01 moles per litre of pH-buffering partially dissociated acid, base and/or salt, which uses an electrode with at least one redox active compound immobilized thereon convertible electrochemically between reduced and oxidized forms with transfer of at least one proton between the compound and the aqueous liquid. Varying potential is applied to the electrode, observing current flow as potential is varied, determining the applied potential at a maximum current for redox reaction of the compound, and determining pH from the potential at maximum current. The electrode has a covering layer which separates the redox active compound from the aqueous liquid but selectively allows the passage of hydrogen ions between the redox active compound and the aqueous liquid. The presence of the covering layer enhances accuracy of the measurement of pH of the aqueous liquid.

### SUMMARY

According to the invention, the problem is solved by means of a reference system, and a method for providing a stable reference for an electrochemical or ion selective sensor, as defined in the independent claims. Advantageous further developments of the invention are set forth in the dependent claims.

In embodiments of the present invention, a redox active species is coupled with a reference electrode and the reference electrode is configured to contact a low buffer/low buffering capacity media, such that the redox active species sets the pH of the environment local to the surface of the reference electrode surface. In embodiments of the present disclosure, the voltammetric response of the reference electrode, when in contact with a low buffer media, to an applied voltammetric sweep includes a singularity, a peak or a trough, which corresponds to the pH of the local environment set by the redox active species. The local environment pH set by the redox active species is a constant/absolute set by the chemistry of the redox active species; i.e., set by the consumption/release of protons specific to the redox active species' chemistry. Similarly, the potential of the peak and/or trough in the voltammetric response is also a constant/absolute set by the local pH and the chemistry of the redox active species. As such, the response of the reference electrode in a low buffer media is a constant that can be used as a reference for an ion selective/electrochemical sensor.

In some embodiments, the reference electrode may comprise a "naked" electrode that is configured for use in a sensor that is configured to be used to measure properties of an analyte in a solution, where the solution comprises a low buffer solution, such as water, seawater, saline solution, KCl, AgCl and/or the like. For example, the sensor may be a sensor designed to measure pH of water or seawater or to measure pH or presence of a particular ion in a low buffer solution, such as for example a saline solution in a medical system or the like.

The redox active species comprises a redox active species that sets the local environment pH to a level that greater than one pH unit from a pH of 7; *i.e.,* the redox active species sets the pH to a level of 6 or less or to a pH of 8 or greater. It is preferable to set the pH a distance from a pH of 7 as many of the low buffer solutions/media, such as water, will set a pH close to 7. By way of example, anthraquinone and quinone derivatives, such as bennzoquinone, anthraquinone, napthoquinone will set a high (alkaline) pH for the local environment and phenylenediamines, phenols, phenothiazines, hydroquoinone etc. will set a low (acidic) pH for the local environment. Acidic or alkaline moieties are attached to the redox active species to control the pH of the local environment.

Previously, in electrochemical sensing, as noted by Compton *et al*., the fact that a redox species controls the pH of the environment local to an electrode was seen as detrimental, since the redox species in such a system could not be used to measure the actual pH of the analyte. However, it was realized by the inventors of the present system that the effect of the redox active species controlling the pH of the local environment could be used in a reference system, since the pH of the local environment of the electrode when contacted with a low buffer solution is an absolute determined by the chemistry of the redox active species and the response of the redox active species to that pH. Applicants have found that reference species that can control the local environment of the reference electrode can facilitate the use of redox active species as reference species by using the correct functionalisation and an understanding of the environment in which the sensor will be immersed.

In some embodiments, the redox active species (sometimes referred to herein as the reference species for conciseness) is configured to control the local environment under certain conditions, where these conditions are provided by the solution being tested by the sensor. For example, redox active species can be used to control the local environment of the reference electrode system when the reference electrode is being used in water, seawater, saline solutions, KCl, AgCl or the like, where the solution being tested has a low natural buffer potential or a low buffering capacity. In water/seawater/saline solutions or the like, because of the low natural buffer potential/low buffering capacity, the redox active species can be used to set the local pH for the reference electrode to greater than one pH unit away from pH 7. If however, the buffer potential or buffering capacity of the solution being tested is high, the pH of the solution will control the pH of the environment local to the reference electrode. In such aspects, because the pH properties of the redox active species are known, the reference may be used to determine buffer potential/buffering capacity of the solution.

### BRIEF DESCRIPTION OF THE DRAWINGS

In the figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
Figure 1 illustrates an electrochemical sensor using a reference system in accordance with embodiments of the present invention, where the reference electrode system is used as an additional working electrode combined in a three electrode set-up.
Figure 4 illustrates that a redox active species, anthraquinone, sets pH of the local environment of an electrode such that the electrode produces a voltammetric response in accordance with the set pH.
Figure 5 is a flow-type illustration of Operation of a reference electrode system in accordance with the present disclosure.

### DESCRIPTION

Embodiments of the present disclosure provide a reference electrode system comprising a redox active species that sets the pH of a low Buffer media local to the reference electrode surface. A voltammetric response from the redox active species will include features /singularities corresponding to the set pH of the local environment of the reference electrode. These features/singularities in the voltammetric response can be used as a reference for an ion selective/ electrochemical sensor. For example, a redox active species will produce a peak redox current at a potential that corresponds to the pH of the local environment of the reference electrode, and this potential can be used as a reference against which measurements from an ion selective/electrochemical sensor can be made. For signal processing purposes, features other than the actual singularities in the voltammetric response may be used for processing the voltammetric response to generate a reference signal.

In embodiments of the present disclosure, the reference electrode is configured for use directly in a solution being tested by the sensor, where the solution is a low buffer solution. A voltammetric sweep is applied to the reference electrode and a voltammetric response of the reference electrode is processed. The voltammetric response will include features/singularities with properties that depend upon the pH of the local environment of the reference electrode, and because this pH is set by the redox active species the voltammetry response provides a reference from which measurements from a sensor can be processed. In some embodiments, signal processing or the like may be used to measure the properties of the voltammetric response. Advantageously, because the location of the features/singularities can be predicted based upon the pH set by the redox active species and the response of the redox active species to the set pH, weightings can be given to expected locations of features/singularities and used in the signal processing. Additionally, in some embodiments, the voltammetric sweep may be tailored to sweep potentials around expected locations of features/singularities in the voltammetric response.

In embodiments of the present disclosure, the reference system may be used in a sensor configured to measure properties of or detect ions in low buffer solutions, such as water, seawater, saline solutions, KCl, AgCl and/or the like. In other sensors, the reference electrode may be disposed in a low buffer reference solution. Advantageously, the voltammetric response of the reference electrode may be used to identify issues with the reference system. For example, appearance of additional features in a voltammetric sweep may identify contamination/break down of the reference solution contacting the reference electrode. Large movement of features/singularities in the voltammetric response may also correspond to contamination of the reference solution contacting the reference electrode or breakdown, loss of the redox active species from the reference electrode. As the reference electrode is directly in contact with the solution/media being tested, changes in the location of features/singularities in the voltammetric response may be used to determine a buffer level/ionic strength of the media.

Embodiments of the present disclosure may use the following redox active chemical structures (shown below) for the reference electrode, in which the redox active component molecule comprises carboxylic, sulfonic and/or amino moieties, in conditions in which the buffer concentration within the solution being tested/reference solution does not overwhelm the concentration of acid/base moieties of the redox active component molecule local to the surface; such that the pH of the reference electrode surface is that of the pKa of the moiety.

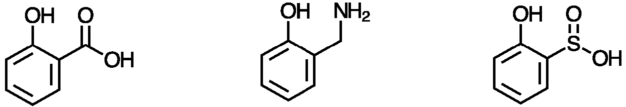

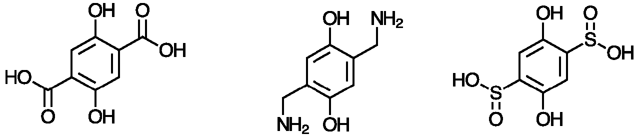

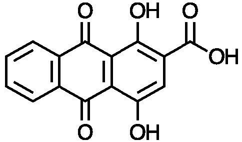

In certain cases, such as that of salicylic acid (top left structure above), a redox active-pH active polymeric layer can be formed containing carboxylic acid moieties. In certain cases where the buffer concentration of the media being tested/reference solution does not overwhelm these moieties, the redox active components of the polymer only observes a pH local to the reference system consistent with that of the pKa of the molecule/moieties. Indeed, in certain embodiments of the present disclosure, as described below, a second reference system can be used to provide a qualitative idea of the buffer concentration and a third electrode can be used to determine the pH of the low salinity and/or low buffered media.

While the structures described above illustrate redox active species with "express" acidic or alkaline structures, many redox active species, such as for example, phenylenediamines, phenols, phenothiazines, hydroquoinone and derivatives thereof will set an acidic local pH and quinones (bennzoquinone, anthraquinone, napthoquinone), or derivatives will set an alakaline pH for the local environment.

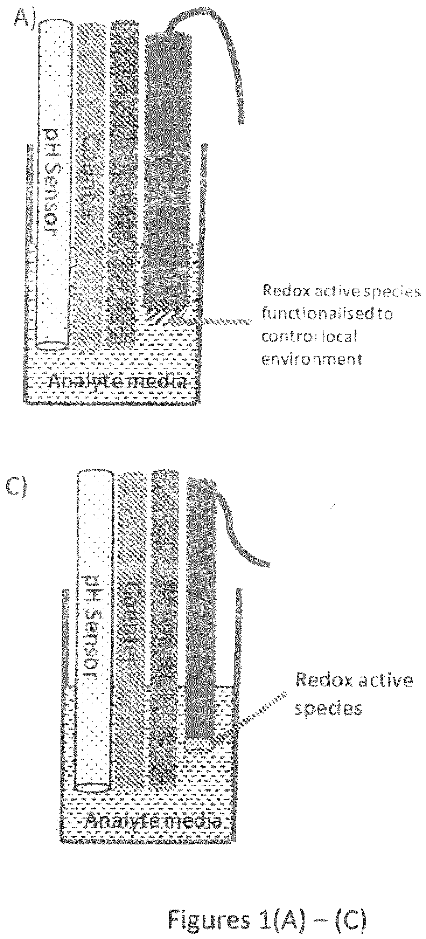

Figures 1(A) and (C) illustrate an electrochemical pH sensor comprising a reference system in accordance with embodiments of the present disclosure. The reference system is configured for use in a low buffer analyte media.

In Figs. 1(A) and (c), the system is run using a conventional electrochemical set-up with external reference and counter electrodes and incorporates the new reference electrode system and a pH sensing electrode. Upon application of a potential ramp, the redox active species of the reference system will be oxidized and reduced and show a potential consistent with the controlled local environment, whereas the pH sensitive electrode will provide a potential consistent with the pH of the analyte. The difference in the redox potential of the new reference system and the pH sensing electrode provides the pH of the solution, independent of any drift from the external electrochemical reference electrode.

In certain embodiments, the reference electrode system may comprise a single layer in which a redox active species is configured to control the pH of the local environment of the reference electrode. The redox active species may comprise a regular redox active species such as anthraquinone or the like or may be a redox active species that includes directly attached moieties to control the local environment (Figure 1(A)). In other embodiments, the redox active species used within the reference electrode system by virtue of its oxidation or reduction properties can control the pH local to the surface of the reference electrode through the release/loss or gain of protons (Figure 1(C)), *i.e.,* the redox active species itself acts as the chemistry that sets the pH local environment of the reference electrode.

In Figures 1(A) and (C), the reference electrode is described as part of a pH sensor. In addition, albeit not forming part of the invention as claimed, the reference system may be used as part of other types of ion selective/electrochemical sensors. For example, a sensor for electrochemically measuring the presence of an ion/analyte in a saline solution, such as for example potassium, ammonium, sodium, phosphate, chloride, nitrate, nitrite, and/or the like, may use the reference output from the reference system of the present disclosure as the baseline against which its output is measured. Advantageously, because the reference system of the present disclosure, when used in a sensor being used in a low buffer analyte media can comprises a naked electrode without a frit of the like, the reference system can be used in microfluidic systems, in-vitro or extra-vitro sensors and/or the like.

The reference electrode may comprise a conducting/ conductive substrate, which substrate may comprise: graphene, carbon nanotubes, carbon, glassy carbon, graphite, diamond, boron doped diamond or the like. The conducting/conductive substrate may comprise a wire, such as a carbon or graphene wire. In some embodiments, a paste/mixture of the redox active species may be formed and coupled with the electrode. For example, a paste/mixture of the redox active species formed with carbon may be disposed in a cavity in the electrode. The paste/mixture may include a binder/epoxy to hold the mixture together. In some embodiments, the electrode maybe produced by printing conductive inks containing the redox active species onto a substrate using screen printed, pad printed, flexiographic or rotar gravure printed technologies. Graphene and/or carbon nanotubes have been found as good material for the electrode substrate as they are strong, provide good/regular conductivity, provide for uniform polymerization of the redox active species onto the substrate and can be used in micro-type electrode systems.

Advantageously, the active redox active species may be selected to be insoluble in aqueous media, and therefore may be solvent cast onto the electrode surface. However, in some embodiments of the present disclosure, the active redox active species may be included in a carbon paste or a carbon epoxy, immobilized within an electrode using a carbon press, screenprinted onto an electrode and/or the like. In fact, many of the active redox species described herein may form versatile redox polymers that can be effectively applied to the reference electrode.

Merely by way of example, operation of a pH sensor is described for use in ocean and source water environment. Of course, sensors for other analytes in different environments can be used with the reference electrode described herein, but ocean and/or source water environment is one of the most challenging environments for a reference electrode because the water/seawater may contain low natural buffer capacity and/or ionic salt. Indeed, in certain aspects of this invention, described below, a second reference system can be used to provide a qualitative idea of the buffer concentration of the media and a third electrode can be used to determine the pH of the low buffer media.

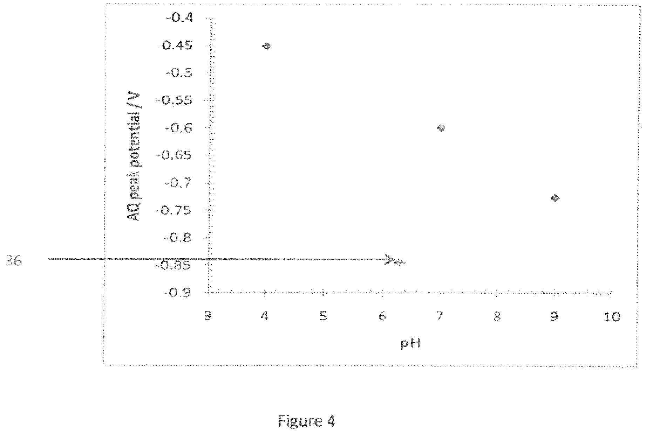

Figure 4 illustrates that a redox active species, anthraquinone, sets the pH of the environment local to an electrode when the redox active species is contacted with a low buffer solution/media, and that the redox active species produces a voltammetric response corresponding to the set pH of the local environment.

In Fig, 4, the redox active species produces a linear series of voltammetric responses (peak potentials) when placed in a series of different pH buffer solutions. This is true of all redox active species and the linear response is used to determine pH of the solution from the voltammetric response of the redox active species. However, point 36 on the graph shows the voltammetric response of anthraquinone when it is disposed on an electrode and disposed in a low buffer/low buffering capacity solution, in this case an aqueous solution with a pH of approximately 6.5. The voltammetric response of the anthraquinone is not on the expected linear response line, and in fact corresponds to a pH of just over 10. This voltammetric response of anthraquinone is the same for any low buffer/low buffer capacity solution, water, seawater, KCl and or the like, and show that the anthraquinone is creating an alkaline solution proximal to the electrode surface. The redox species sets the pH local to the reference electrode by either consuming or releasing protons, depending upon the chemistry of the redox active species. Most importantly, a redox active species will set the same local pH in the low buffer/low buffer capacity solution since the pH is purely dependent upon the chemistry of the redox active pH species, the number of protons released or consumed by this chemistry. Consequently, the redox active species provides a reference voltammetric response when placed in a low buffer/low buffering capacity solution. Advantageously, because the location of the voltammetric response, such as the peak voltage, is known, the position can be used when processing the voltammetric response of the redox active species in the field/in the reference system of a sensor.

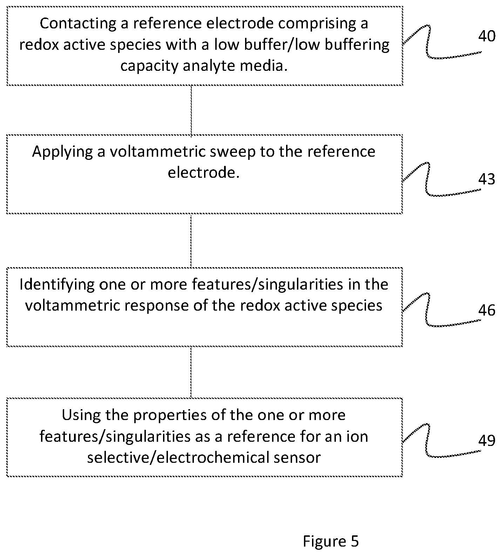

Figure 5 illustrates a flow-type schematic of use of a reference electrode system in accordance with embodiments of the present disclosure in an electrochemical or ion selective sensor.

In step 40, a reference electrode comprising a redox active species, in accordance with embodiments of the present disclosure, is contacted with a low buffer solution/analyte media. The redox active species is selected to control the pH of the low buffer analyte media proximal to the reference electrode. The redox active species control the proton level/concentration proximal to the reference electrode, thus setting the pH, and comprises acid or alkaline moieties that set the local pH. In preferred embodiments, the pH proximal the reference electrode is controlled to be more than one pH unit away from a pH of 7. The analyte media comprises the analyte media being tested/measured by the sensor.

In step 43, a voltammetric sweep is applied to the reference electrode. In some embodiments, the voltammetric sweep may comprise a square wave voltammetric sweep, a linear sweep or the like. The voltammetric sweep is applied by a potentiostat. In some aspects only a portion of a full voltammetric sweep may be applied to the reference electrode, where the portion of the sweep is selected to cover a redox potential of the redox species corresponding to the pH set by the redox active species.

In step 46, the voltammetric response of the redox active species to the applied voltammetric sweep is processed and features/singularities are identified in the voltammetric response. The redox active species will have a peak redox potential corresponding to the pH of the local environment set by the redox active species. Similarly, the redox response will have a singularity corresponding to a reduction current corresponding to the pH of the local environment set by the redox active species. Other features in the voltammetric response such as turning points, locations of maximum change in the response and/or the like may be processed from the voltammetric response.

In step 49, the processed properties of the one or more features/singularities (the peak potential) is used as a reference for an ion selective/electrochemical sensor. As described above, in the reference system of the present disclosure, the redox active species sets the pH of the low buffer analyte media proximal to the reference electrode. The pH depends upon the redox properties of the redox active species and the presence of acid or alkaline moieties in the redox species structure. Both of these properties will give rise to a specific pH when the redox active species is in contact with a low buffer analyte media, such as water, seawater, saline solution, KCl, AgCl and/or the like.

When the voltammetric sweep is applied, the voltammetric response of the redox active species is determined by the chemistry of the redox active species and the pH of the local environment of the low buffer analyte media proximal to the reference electrode. Since the pH is set by the redox active species, which is a constant, and the response of the redox active species to this pH is also a constant, the reference system provides a constant, reference output that can be used by the ion selective/electrochemical sensor against which its variable measurements (pH) can be processed. Unlike conventional reference systems, the reference system of the present disclosure does not drift, does not need re-calibration and/or the like. In some embodiments of the present invention, the response of the reference electrode can be calculated so there is no need for even an initial calibration. However, in practice, batch calibration of the reference electrodes may be performed when manufactured before being sold and used. In some embodiments, the actual voltammetric response of the redox active species may be processed and used to determine the health of the reference system.

While the principles of the disclosure have been described above in connection with specific apparatuses and methods, it is to be clearly understood that this description is made only by way of example and not as limitation on the scope of the invention which is defined by the claims.

## Claims

1. A reference system configured for an ion selective/electrochemical pH sensor for measuring pH of a solution which is a low buffer/low buffering capacity analyte media, comprising:
a reference electrode coupled with a redox active species comprising acidic or alkaline moieties, wherein the redox active species is configured in use to directly contact the low buffer/low buffering capacity analyte media,
**characterized in that** the redox active species is configured to control a pH of a local environment of the low buffer/low buffering capacity analyte media proximal to the reference electrode,
wherein the redox active species is configured to control the pH of the local environment to a constant pH of 6 or less or to a pH of 8 or greater,
wherein the reference system further comprises a potentiostat configured to apply a voltammetric sweep to the reference electrode, wherein the redox active species provides a constant response to the voltammetric sweep, such that the reference system provides a constant reference output.

2. The reference system of claim 1, wherein the redox active species comprises a quinone or a derivative thereof, a phenylenediamine, a phenol, a phenothiazine, a hydroquinone.

3. The reference system of claim 1, wherein the redox active species comprises a salicylic acid based polymer or one of the following chemical structures:

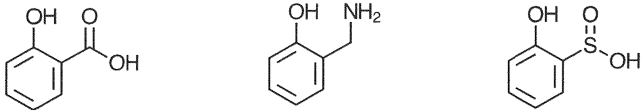

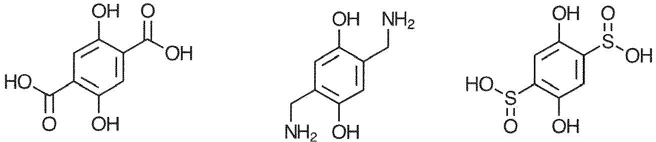

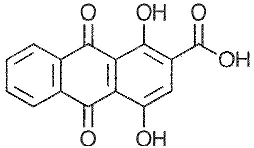

4. An electrochemical sensor comprising:
the reference system according to any of claims 1-3,
a second reference electrode;
a counter electrode; and
a pH sensing electrode.

5. A method for providing a stable reference for an electrochemical or ion selective sensor, comprising:
contacting a reference electrode coupled with a redox active species comprising acidic or alkaline moieties with a low buffer/low buffering capacity analyte media (40), wherein the low buffer/low buffering capacity analyte media is a solution being sensed by the electrochemical or ion selective sensor and the reference electrode directly contacts the solution, and
wherein the redox active species is configured to set a pH of a local environment of the low buffer/low buffering capacity analyte media proximal to the reference electrode, wherein the redox active species is configured to control the pH of the local environment to a constant pH of 6 or less or to a pH of 8 or greater;
applying a voltammetric sweep to the reference electrode (43); and
using properties of a feature/singularity in a voltammetric response of the redox species to the voltammetric sweep as a reference for the electrochemical or ion selective sensor (49).

6. The method of claim 5, wherein the low buffer/low buffering capacity analyte media comprises one of water, seawater, saline solution or KCl.

## Patentansprüche

1. Referenzsystem, das für einen ionenselektiven/elektrochemischen pH-Sensor zum Messen des pH-Wertes einer Lösung konfiguriert ist, die ein Analytmedium mit geringem Puffer/geringer Pufferkapazität ist, umfassend:
eine Referenzelektrode, die mit einer redoxaktiven Spezies, die saure oder alkalische Teile umfasst, gekoppelt ist, wobei die redoxaktive Spezies im Gebrauch so konfiguriert ist, dass sie direkt mit dem Analytmedium mit geringem Puffer/geringer Pufferkapazität in Kontakt steht, **dadurch gekennzeichnet, dass** die redoxaktive Spezies konfiguriert ist, einen pH-Wert einer lokalen Umgebung des Analytmediums mit geringem Puffer/geringer Pufferkapazität in der Nähe der Referenzelektrode zu regeln,
wobei die redoxaktive Spezies konfiguriert ist, den pH-Wert der lokalen Umgebung auf einen konstanten pH-Wert von 6 oder weniger oder auf einen pH-Wert von 8 oder mehr zu regeln,
wobei das Referenzsystem ferner einen Potentiostaten umfasst, der so konfiguriert ist, dass er einen voltammetrischen Sweep auf die Referenzelektrode anwendet, wobei die redoxaktive Spezies eine konstante Reaktion auf den voltammetrischen Sweep liefert, so dass das Referenzsystem eine konstante Referenzausgabe liefert.

2. Referenzsystem nach Anspruch 1, wobei die redoxaktive Spezies ein Chinon oder ein Derivat davon, ein Phenylendiamin, ein Phenol, ein Phenothiazin oder ein Hydrochinon umfasst.

3. Referenzsystem nach Anspruch 1, wobei die redoxaktive Spezies ein Polymer auf Salicylsäurebasis oder eine der folgenden chemischen Strukturen umfasst:

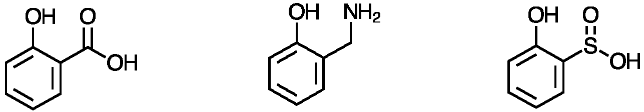

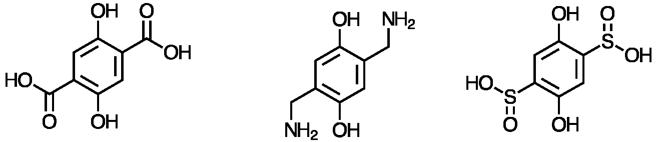

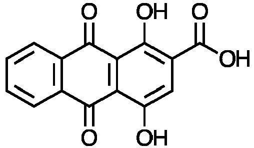

4. Elektrochemischer Sensor, umfassend:
das Referenzsystem gemäß einem der Ansprüche 1-3,
eine zweite Referenzelektrode;
eine Gegenelektrode; und
eine pH-Sensorelektrode.

5. Verfahren zur Bereitstellung einer stabilen Referenz für einen elektrochemischen oder ionenselektiven Sensor, umfassend:
Inkontaktbringen einer Referenzelektrode, die mit einer redoxaktiven Spezies, die saure oder alkalische Teile umfasst, gekoppelt ist, mit einem Analytmedium (40) mit geringem Puffer/geringer Pufferkapazität, wobei das Analytmedium mit geringem Puffer/geringer Pufferkapazität eine Lösung ist, die von dem elektrochemischen oder ionenselektiven Sensor erfasst wird, und die Referenzelektrode direkt mit der Lösung in Kontakt steht, und wobei die redoxaktive Spezies konfiguriert ist, einen pH-Wert einer lokalen Umgebung des Analytenmediums mit geringem Puffer/geringer Pufferkapazität in der Nähe der Referenzelektrode einzustellen, wobei die redoxaktive Spezies konfiguriert ist, den pH-Wert der lokalen Umgebung auf einen konstanten pH-Wert von 6 oder weniger oder auf einen pH-Wert von 8 oder mehr zu regeln;
Anwenden eines voltammetrischen Sweeps auf die Referenzelektrode (43); und
Verwenden von Eigenschaften eines Merkmals/einer Singularität in einer voltammetrischen Reaktion der Redox-Spezies auf den voltammetrischen Sweep als Referenz für den elektrochemischen oder ionenselektiven Sensor (49).

6. Verfahren nach Anspruch 5, wobei das Analytmedium mit geringem Puffer/geringer Pufferkapazität eines von Wasser, Meerwasser, Salzlösung oder KCl umfasst.

## Revendications

1. Système de référence configuré pour un capteur de pH électrochimique/sélectif d'ions destiné à mesurer le pH d'une solution qui est un milieu d'analyte à faible tampon/faible pouvoir tampon, comprenant :
une électrode de référence couplée à une espèce redox active comprenant des fragments acides ou alcalins, dans lequel l'espèce redox active est configurée en utilisation pour entrer en contact direct avec le milieu d'analyte à faible tampon/faible pouvoir tampon,
**caractérisé en ce que** l'espèce redox active est configurée pour réguler le pH d'un environnement local du milieu d'analyte à faible tampon/faible pouvoir tampon à proximité de l'électrode de référence,
dans lequel l'espèce redox active est configurée pour réguler le pH de l'environnement local à un pH constant de 6 ou moins ou à un pH de 8 ou plus,
dans lequel le système de référence comprend en outre un potentiostat configuré pour appliquer un balayage voltamétrique à l'électrode de référence, dans lequel l'espèce redox active fournit une réponse constante au balayage voltamétrique, de sorte que le système de référence fournit une sortie de référence constante.

2. Système de référence selon la revendication 1, dans lequel l'espèce redox active comprend une quinone ou un dérivé de celle-ci, une phénylènediamine, un phénol, une phénothiazine, une hydroquinone.

3. Système de référence selon la revendication 1, dans lequel l'espèce redox active comprend un polymère à base d'acide salicylique ou l'une des structures chimiques suivantes :

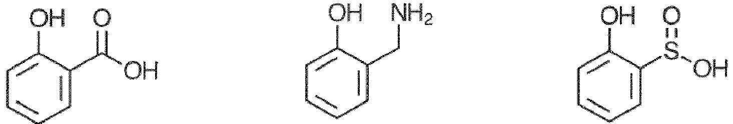

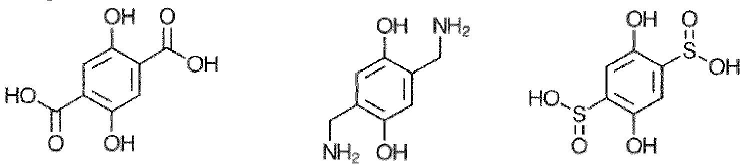

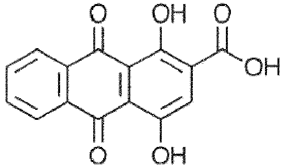

4. Capteur électrochimique comprenant :
le système de référence selon l'une quelconque des revendications 1 à 3,
une deuxième électrode de référence ;
une contre-électrode ; et
une électrode de détection du pH.

5. Procédé pour fournir une référence stable pour un capteur électrochimique ou sélectif d'ions, consistant à :
mettre en contact une électrode de référence couplée à une espèce redox active comprenant des fragments acides ou alcalins avec un milieu d'analyte à faible tampon/faible pouvoir tampon (40), dans lequel le milieu d'analyte à faible tampon/faible pouvoir tampon est une solution détectée par le capteur électrochimique ou sélectif d'ions et l'électrode de référence est en contact direct avec la solution, et dans lequel l'espèce redox active est configurée pour régler le pH d'un environnement local du milieu d'analyte à faible tampon/faible pouvoir tampon à proximité de l'électrode de référence, dans lequel l'espèce redox active est configurée pour réguler le pH de l'environnement local à un pH constant de 6 ou moins ou à un pH de 8 ou plus ;
appliquer un balayage voltamétrique à l'électrode de référence (43) ; et
utiliser les propriétés d'une caractéristique/singularité dans une réponse voltamétrique de l'espèce redox au balayage voltamétrique comme référence pour le capteur électrochimique ou sélectif d'ions (49).

6. Procédé selon la revendication 5, dans lequel le milieu d'analyte à faible tampon/faible pouvoir tampon comprend l'un des éléments suivants : eau, eau de mer, solution saline ou KCl.
